# EUROPÄISCHE PATENTANMELDUNG

(11) **EP 1 656 823 A1**
(43) Veröffentlichungstag der Anmeldung: **17.05.2006**
(21) Anmeldenummer: 04026659.5
(22) Anmeldetag: 10.11.2004
(51) Int. Cl.: A01D 34/69, F16H 9/04

(54) **Antrieb für einen fahrbaren Rasenmäher**

(71) Anmelder: Viking GmbH, 6336 Langkampfen-Kufstein (AT)
(72) Erfinder: Huber, Reinhold, 6111 Volders (AT)
(74) Vertreter: Riedel, Peter

(57) **Zusammenfassung**

Die Erfindung betrifft einen Fahrtantrieb für einen fahrbaren Rasenmäher (1), dessen Motor (3) ein Werkzeug (5) über eine Antriebswelle (4) rotierend antreibt, wobei mindestens ein Rad (2) des Rasenmähers (1) mittels eines Riemengetriebes von der Antriebswelle (4) antreibbar ist.

Um einen Antrieb zu schaffen, welcher mit einfachen baulichen Mitteln einen bedarfsweisen Wechsel der Antriebsrichtung des Rasenmähers und zugleich stufenlos veränderliche Fahrtgeschwindigkeit ermöglicht, ist ein mehrstufiger Fahrantrieb vorgesehen mit einem Primärantrieb (7), welcher zwei Antriebsscheiben (10, 11, 27, 28) mit unterschiedlichen Drehrichtungen antreibt und mit einem Sekundärriementrieb (8, 8'), welcher auf eine an das Rad (2) gekoppelte Abtriebsscheibe (13) wirkt, wobei im Sekundärriementrieb (8,8') eine Schalteinrichtung (9, 99) für die Antriebsrichtung vorgesehen ist, welche je nach Schaltstellung eine der beiden Antriebsscheiben (10, 11, 27, 28) in Wirkverbindung mit einem Sekundärtrum (18, 18') des Sekundärriementriebs (8, 8') bringt. In einer besonderen Ausgestaltung enthält die Schalteinrichtung (99) einen mechanischen Servomechanismus, der die Bedienkräfte minimiert.

## Beschreibung

Die Erfindung betrifft einen Antrieb für einen über Räder fahrbaren Motorrasenmäher der im Oberbegriff des Patentanspruchs 1 angegebenen Gattung.

Ein Rasenmäher umfaßt ein Schneidmesser, welches an seiner Unterseite über die zu bearbeitende Bodenfläche bewegt wird und von einem Motor des Rasenmähers rotierend angetrieben wird. Der Motor kann gleichzeitig für den Radantrieb des Rasenmähers genutzt werden, indem die Antriebswelle des Mähwerkzeuges auf die Räder des Rasenmähers gekuppelt wird. Die DE 29 50 459 A1 beschreibt einen Vortrieb eines Rasenmähers, bei dem die Antriebswelle des Schneidwerkzeugs über ein Riemengetriebe auf die Räder des Mähers einwirkt. Zur stufenlosen Einstellung der Fahrtgeschwindigkeit des Mähers sieht der bekannte Antrieb eine auf die Räderwelle wirkende Riemenscheibe mit variabel einstellbarem Durchmesser vor. Beim Betrieb eines fahrbaren Rasenmähers ist es oft erforderlich, den Rasenmäher rückwärts zu bewegen. Eine Unterstützung der Rückwärtsbewegung des Rasenmähers ist bei dem bekannten Riementrieb für die Räder des Rasenmähers nicht möglich.

Die DE 37 15 336 A1 offenbart ein Riemengetriebe für eine landwirtschaftliche Maschine, welches eine bedarfsweise Umkehr der Abtriebsdrehrichtung vorsieht, um bei einem selbstladenden Erntewagen ein Rücklaufen des Querförderbandes am rückwärtigen Wagenende zu ermöglichen. Dabei sind zwei Riemengetriebe vorgesehen mit einer Getriebeeingangswelle und einer Getriebeausgangswelle sowie einem Zwischengriebe sowie einer Einrichtung, welche jeweils einen der beiden Riementriebe auf das Antriebsrad schaltet. Die beiden alternativ einschaltbaren Abtriebsriemen laufen auf Riemenrädern um, deren Wellen auf einer Wippe gelagert sind, wobei die Wippenachse zwischen den Wellen angeordnet ist und das Verschwenken der Wippe in zwei Schwenklagen gestattet, in denen jeweils einer der Riementriebe gespannt und der andere entspannt ist.

Der vorliegenden Erfindung liegt die Aufgabe zugrunde, einen Radantrieb für einen über Räder fahrbaren Rasenmäher der gattungsgemäßen Art zu schaffen, welcher mit einfachen baulichen Mitteln einen bedarfsweisen Wechsel der Antriebsrichtung ermöglicht.

Diese Aufgabe wird erfindungsgemäß mit den Merkmalen des Patentanspruchs 1 gelöst.

Erfindungsgemäß ist ein mehrstufiger Fahrantrieb zwischen der Messerwelle des Rasenmähers und einer Räderwelle vorgesehen, wobei ein Sekundärriementrieb auf eine an das Rad gekoppelte Abtriebsscheibe wirkt. In einem Primärantrieb werden zwei Antriebsscheiben von der Messerwelle des Motors mit unterschiedlichen Drehrichtungen angetrieben, welche alternativ auf den Sekundärtrieb geschaltet werden. Die zwei Antriebsscheiben mit unterschiedlicher Drehrichtung können permanent von der Messerwelle über einen Primärriemen oder von einer anderen, mit dem Motor gekoppelten Welle angetrieben sein. In zweckmäßiger Bauweise erfolgt der Primärantrieb über einen Riementrieb, wobei die Antriebswelle des Motors über einen Primärriemen, der vorteilhaft als Rundriemen ausgeführt wird, die Antriebsscheiben entgegengesetzt antreibt.

In einfacher baulicher Gestaltung kann auf diese Weise der Sekundärriementrieb in beiden Drehrichtungen gedreht werden, indem der Sekundärriemen mit einer der beiden Antriebsscheiben in Wirkverbindung gebracht wird. Für die Umschaltung ist eine von der Bedienperson des Rasenmähers betätigbare Schalteinrichtung vorgesehen, welche je nach Schaltstellung eine der beiden Antriebsscheiben in Wirkverbindung mit dem Sekundärriemen bringt. Vorteilhaft ist die Abtriebsscheibe im Sekundärtrieb als im Durchmesser stufenlos veränderliche Varioscheibe ausgebildet, wodurch sich verschiedene Übersetzungen entsprechend dem Scheibendurchmesser ergeben. Zur Gewährleistung der Riemenspannung ist die Varioscheibe mit einer Spannfeder ausgestattet.

In einer vorteilhaften Ausgestaltung der Erfindung ist die Schalteinrichtung zum Wechsel der Antriebsdrehrichtung im Sekundärriementrieb eine Rolleneinrichtung, über die der Sekundärriemen läuft und welche relativ zu den gegensinnig laufenden Antriebsscheiben derart auslenkbar angeordnet ist, daß je nach Schaltstellung alternativ eine der beiden Antriebsscheiben in Eingriff mit dem Riementrum gebracht wird. Geringe Bewegungswege für die Auslenkung sind erforderlich, wenn die Antriebsscheiben zwischen der auslenkbaren Rolleneinrichtung und der Abtriebsscheibe und jeweils benachbart eines der Riementrums des Sekundärriementriebs angeordnet sind. Dabei können sich die Antriebsscheiben in einer möglichen Gestaltung außerhalb der beiden Riementrums befinden und durch entsprechende Schwenkbewegung wird eine der beiden Antriebsscheiben einwärts gezogen und an der Außenseite des Sekundärriemens angelegt. Eine Anordnung mit geringem Bauvolumen ist gegeben, wenn die gegensinnigen Antriebsscheiben zwischen den Riementrums angeordnet sind und durch Schwenkbewegungen der Rolleneinrichtung nach außen eine der Antriebsscheiben auf den jeweils zugeordneten Riementrum wirkt.

In einer alternativen Ausgestaltung der Erfindung sind die vom Primärriemen mit unterschiedlichen Drehrichtungen angetriebenen Antriebsscheiben als in ihren Durchmessern variabel einstellbare Varioscheiben ausgebildet, über die der Sekundärriementrieb läuft. Die Schalteinrichtung für die Umschaltung der Antriebsrichtung koppelt dabei die Stellmittel für die stufenlose Veränderung der Scheibendurchmesser der Varioscheiben derart, daß zur Einwirkung einer Varioscheibe auf den Riementrum ein vergrößerter Scheibendurchmesser eingestellt wird und der Durchmesser der jeweils anderen Varioscheibe in eine Leerlaufstellung mit kleinem Durchmesser gebracht wird. In der Leerlaufstellung mit kleinem Durchmesser läuft der Sekundärriemen lastfrei durch die Varioscheibe. Allein die zweite Varioscheibe, die in entgegengesetzter Richtung umläuft, wirkt reibschlüssig mit ihrem entsprechenden Scheibendurchmesser auf den Sekundärriemen ein. Zur Umschaltung der Drehrichtung wird entsprechend die andere Varioscheibe durch Einstellung ihres Durchmessers in Reibschluß mit dem Treibriemen gebracht, während die andere Varioscheibe in die Leerlaufstellung gebracht wird und die reibschlüssige Einwirkung auf den Riemen unterbrochen wird. Bei dieser Ausgestaltung der Erfindung sind schwenkbare Scheiben nicht erforderlich, und es kann ein hoher Umschlingungswinkel und damit sicherer Reibschluß erreicht werden, wenn der Sekundärriemen über eine zwischen den Varioscheiben und der Abtriebsscheibe angeordnete Führungsrolle läuft. Auch in dieser Ausführung der Erfindung wird die Abtriebsscheibe als stufenlos veränderliche, federbelastete Varioscheibe ausgebildet, wodurch über eine entsprechende Einregelung des Durchmessers der einstellbaren Abtriebsscheibe im Sekundärtrieb neben der Fahrtgeschwindigkeit auch die erforderliche Riemenspannung im Sekundärtrieb eingestellt werden kann.

Die Varioscheiben werden vorteilhaft mit jeweils zwei in Überdeckung liegenden Scheibenbacken ausgebildet, welche axial zueinander verschieblich angeordnet sind und einen V-förmigen Zwischenraum zur Aufnahme eines Treibriemens einschließen. Durch die Scheibe läuft ein Sekundärriemen mit V-Querschnitt, wodurch eine hohe Auflage- bzw. Kontaktfläche für die reibschlüssige Kraftübertragung zwischen Scheibe und Treibriemen gegeben ist. Die alternativ zum Zweck der Umschaltung der Drehrichtung aktivierbaren Varioscheiben weisen zwischen ihren Scheibenbacken einen frei drehbar gelagerten Auflagering auf, auf dem der V-Sekundärriemen mit seinem Riemengrund in der geöffneten Stellung in der Varioscheibe aufliegt. Die Schaltvorrichtung koppelt die Stellbewegungen der Scheibenbacken derart, daß bei Einschaltung der einen Varioscheibe die jeweils andere Varioscheibe geöffnet wird und der Sekundärriemen dort antriebslos auf dem zentralen Auflagering mitläuft. Der Auflagering kann vorteilhaft durch ein Kugellager gebildet werden, dessen Außenring bei Öffnung der Varioscheibe freigelegt wird.

Um die erforderlichen Betätigungskräfte für eine Bedienperson zur Umschaltung der Antriebsrichtung oder zur Änderung der Fahrtgeschwindigkeit gering zu halten, ist eine Schalteinrichtung vorgesehen, welche als Servounterstützung die Motorkraft zur Überwindung der hohen Rückstellkräfte der V-Riemen heranzieht. Die erfindungsgemäße Schalteinrichtung sieht dabei zwei parallel liegende und zweckmäßig von dem Primärriementrieb in entgegengesetzten Richtungen angetriebene Wellen vor, auf denen die Varioscheiben drehfest angeordnet sind, wobei eine Scheibenbacke der Varioscheibe axial verschieblich ist. Die verschiebliche Scheibenbacke der Varioscheibe stützt sich axial an einer Steuerscheibe ab, die mit Gewindeeingriff auf einem Steuergewinde der jeweiligen Welle drehbeweglich angeordnet ist. Die Steuergewinde und die Steuerscheiben der beiden Wellen haben unterschiedliche Gewinderichtungen. Dadurch können die Steuerscheiben und ihnen folgend die jeweiligen Varioscheiben je nach Drehrichtung, über ein rechts- oder linksgängiges Steuergewinde relativ zu den Antriebswellen ein- und ausgeschraubt werden. Das Einschrauben erfolgt dabei durch Abbremsen über Reibkontakt mit der drehfesten Steuerhülse, das Ausschrauben erfolgt über Reibkontakt mit dem schneller laufenden Rückstellrad. Das Steuergewinde kann dabei zweckmäßig auf den Wellenzapfen ausgebildet sein, wobei die Steuerscheibe eine mit ihrem Innengewinde auf dem Gewindezapfen schraubbewegliche Mutter ist.

Dem Gewinde der drehenden Scheibenwelle folgend wirkt die Steuerscheibe auf die Nabe der beweglichen Scheibenbacke ein. Die Einwärtsbewegung der axial verschieblichen Scheibenbacke zur Vergrößerung des Scheibendurchmessers ist gegen die rückstellende Kraft des Sekundärriemens und dessen Riemenspannung aufzubringen und wird als Servosystem von der Drehbewegung der Welle unterstützt und muß nicht von der Bedienperson aufgebracht werden.

Für die servounterstützte Bewegung in entgegengesetzter Richtung ist pro Welle ein drehbar auf der Nabe der verschieblichen Scheibenbacke gelagertes Rückstellrad vorgesehen, welches mit der Steuerscheibe über axiales Spiel in reibschlüssige Verbindung bringbar ist und durch Ziehen der Steuerhülse die Steuerscheibe ausschraubt. Das Rückstellrad wird dabei von einer der Wellen mittels eines Getriebes mit erhöhter Drehzahl gegenüber der Welle angetrieben. Der Drehantrieb des schnell drehenden Rückstellrades kann durch ein Zahnradgetriebe erfolgen, wobei eine der Wellen das Rückstellrad der jeweils anderen Welle antreibt und dieses Rückstellrad seinerseits mit einer Umfangsverzahnung des frei drehbar auf der Antriebswelle gelagerten Rückstellrades kämmt. Alternativ ist ein sicherer Drehantrieb zwischen Welle und Rückstellrad durch ein Riemengetriebe möglich.

An der Steuerscheibe und an der Steuerhülse einerseits sowie auf der innenliegenden Seite der Rückstellräder sind Kontaktflächen vorgesehen, welche je nachdem, ob Zug oder Druck an der Steuerhülse vorliegt, aneinandergelegt werden und für reibschlüssige Kraftübertragung sorgen. Sowohl die Kontaktflächenpaarung der Steuerscheibe mit der Steuerhülse, als auch der Steuerscheibe mit dem Rückstellrad sind vorteilhaft konisch ausgebildet, wodurch der Bediener in Verbindung mit dem Steuergewinde nur sehr geringe Betätigungskräfte zur Verstellung der Varioscheibe aufbringen muß.

Ausführungsbeispiele der Erfindung sind nachstehend anhand der Zeichnung näher erläutert. Es zeigen:
- Fig. 1: eine schematische Ansicht eines fahrbaren Motorrasenmähers mit einem Riemenantrieb,
- Fig. 2: eine perspektivische Ansicht des Riementriebs im Rasenmäher nach Fig. 1,
- Fig. 3: eine perspektivische Ansicht der Rückseite des Riementriebes,
- Fig. 4 bis Fig. 6: schematische Darstellungen der Schaltstellungen des Sekundärriementriebs,
- Fig. 7 und Fig. 8: Darstellungen eines Sekundärriementriebs mit Unterstützung von Kurvenfahrten des Mähers,
- Fig. 9: eine schematische Darstellung des Sekundärriementriebes nach Fig.2 und Fig.3,
- Fig. 10: eine alternative Ausgestaltung des zweistufigen Riementriebes des Rasenmähers nach Fig. 1,
- Fig. 11: eine Schnittdarstellung einer Servo-Schalteinrichtung zur Umschaltung der Antriebsdrehrichtung des Sekundärriementriebes und zur variablen Einstellung der Riemenscheibe,
- Fig. 12: eine perspektivische Ansicht einer Servo-Schalteinrichtung für eine variabel einstellbare Riemenscheibe,
- Fig. 13: eine Schnittdarstellung der Anordnung nach Fig. 12,
- Fig. 14: eine perspektivische Ansicht einer Riemenscheibe mit variabel einstellbarem Durchmesser,
- Fig. 15: eine Schnittdarstellung der Varioscheibe nach Fig. 14.

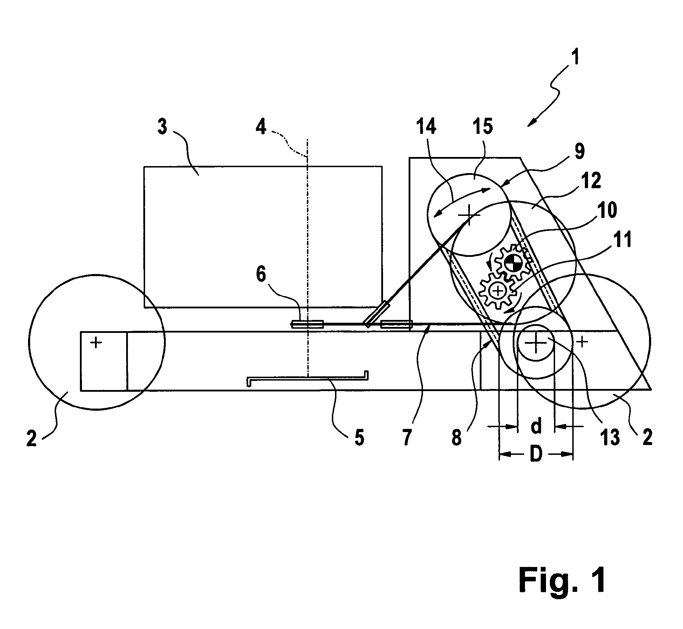

Fig. 1 zeigt in schematischer Darstellung einen Rasenmäher 1, dessen Mähergehäuse mittels Rädern 2 über die zu bearbeitende Fläche fahrbar ist. Der Rasenmäher 1 weist als Werkzeug ein Schneidmesser 5 auf, welches zu der zu bearbeitenden Bodenfläche frei liegt. Das Schneidmesser 5 wird rotierend von einer Motorwelle 4 eines Antriebsmotors 3 des Rasenmähers 1 angetrieben, wobei der Antriebsmotor 3 ein Elektromotor oder ein Verbrennungsmotor sein kann. Zur Fortbewegung des Rasenmähers wird mindestens eines der Räder 2 über einen Riementrieb von der Antriebswelle 4 des Messerblattes 5 angetrieben. Dabei ist ein zweistufiger Riementrieb vorgesehen, wobei ein Primärriemen 7 über eine Abtriebsscheibe 6 auf der Messerwelle 4 läuft und eine Riemenscheibe 12 antreibt. Der Primärriemen 7 ist als Rundriemen ausgestaltet. Der Primärriemen 7 treibt über die Rundriemenscheibe 12 zwei Antriebsscheiben 10, 11 in gegenläufigen Richtungen an. Im gezeigten Ausführungsbeispiel ist dabei die eine der Antriebsscheiben 10 koaxial zu der Rundriemenscheibe 12 angeordnet und drehfest mit dieser verbunden. Am Umfang der ersten Antriebsscheibe 10 wälzt sich vorteilhaft über eine Verzahnung das zweite Antriebsrad 11 ab und wird in der entgegengesetzten Drehrichtung zwangsgetrieben.

Der Antrieb des Rades 2 erfolgt über einen Sekundärriementrieb 8, welcher über eine Rolleneinrichtung 9 und eine auf das Rad 2 wirkende Abtriebsscheibe 13 läuft. Die Abtriebsscheibe 13 ist als Varioscheibe 13 ausgebildet, bei der ein Scheibendurchmesser zwischen einem großen Durchmesser D und einem kleinen Durchmesser d stufenlos einstellbar ist und dadurch entsprechend dem eingestellten Durchmesser die Fahrtgeschwindigkeit des Rasenmähers 1 bestimmt. Die Varioscheibe ist mit einer Spannfeder ausgestattet, welche die Riemenspannung im Sekundärriementrieb 8 erzeugt. Die Antriebsscheiben 10, 11 sind zwischen den beiden Riementrums des Sekundärriemens 8 angeordnet. Die Rolleneinrichtung 9 ist in Pfeilrichtung 14 schwenkbeweglich, wobei entsprechend der Schaltstellung der Rolleneinrichtung 9 einer der beiden Riementrums an die jeweils benachbart liegende Antriebsscheibe angedrückt wird und der Sekundärriemen so in der Antriebsrichtung der jeweils aktivierten Antriebsscheibe 10, 11 umläuft. Die Rolleneinrichtung 9, die im vorliegenden Ausführungsbeispiel als schwenkbeweglich gelagerte Führungsscheibe 15 ausgebildet ist, ist dabei zu beiden Seiten aus einer Leerlaufstellung verschwenkbar, in der keine der permanent angetriebenen Antriebsscheiben auf den Sekundärriemen 8 einwirkt.

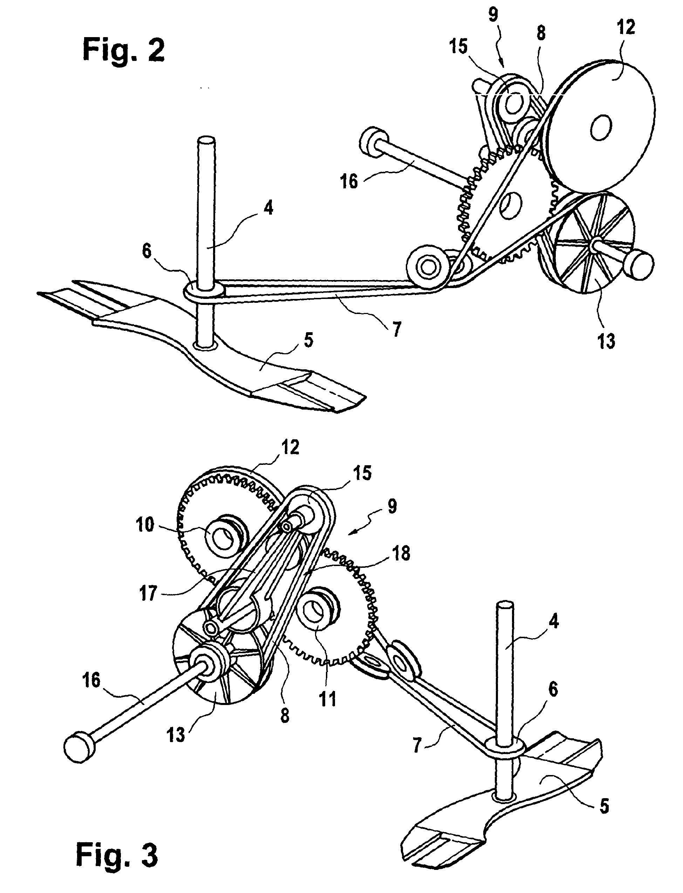

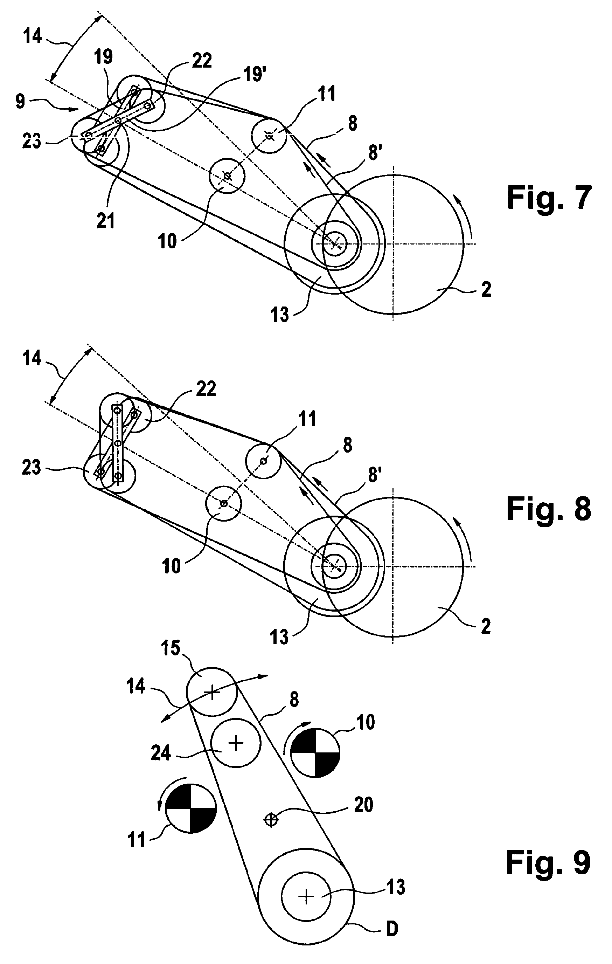

Eine perspektivische Ansicht des Riementriebes zeigen Fig. 2 und 3. Fig. 9 zeigt den Riementrieb in vereinfachter schematischer Darstellung. Für jeweils gleiche Bauteile sind dabei die gleichen Bezugszeichen verwendet wie in Fig. 1. Über den Primärriemen 7 treibt die Messerwelle 4 eine Rundriemenscheibe 12 an. Ein Sekundärriemen 8 wirkt auf eine im Durchmesser einstellbare Varioscheibe 13, welche drehfest auf der Radwelle 16 eines Antriebsrades des Rasenmähers gehalten ist. Die Rundriemenscheibe 12 weist auf ihrer dem Sekundärtrieb zugewandten Stirnseite einen verzahnten Absatz auf, welcher mit einer Verzahnung einer weiteren Rundriemenscheibe 12 kämmt und dadurch die zweite Rundriemenscheibe in entgegengesetzter Drehrichtung antreibt. Auf den Rückseiten der Rundriemenscheiben sind jeweils konzentrisch Antriebsscheiben 10, 11 ausgebildet, welche entsprechend der Drehzahl und Drehrichtung der jeweiligen Rundriemenscheibe 12 umlaufen. Im Unterschied zu der in Fig. 1 beschriebenen Anordnung ist der Sekundärriemen 8 zwischen den Antriebsrädern 10, 11 durchgeführt, wodurch die Antriebsräder 10, 11 nicht zwischen den Riementrums, sondern außerhalb des Riementrums angeordnet sind. Die Führungsrolle 15 ist an einem Schwenkarm 17 gelagert, dessen Drehpunkt zwischen der Varioscheibe 13 und der Führungsrolle 15 liegt. Zur Kraftübertragung auf die Radwelle 16 wird die schwenkbare Führungsscheibe 15 in eine Stellung gebracht, in der eine der Riemenscheiben an die Rückseite des ihr zugeordneten Riementrums 18 einwirkt. Je nachdem, ob Vorwärts- oder Rückwärtstrieb gefordert ist, wird die Rolleneinrichtung 9 betätigt und der Riementrieb durch die Schwenkstellung der Führungsscheibe alternativ an einer der beiden Antriebsscheiben 10, 11 angelegt.

Fig. 9 zeigt eine schematische Darstellung der Sekundärstufe des Riementriebs nach Fig. 2 und 3, bei der die gegensinnig vom Primärtrieb angetriebenen Antriebsscheiben 10, 11 an den Außenseiten des Sekundärriemens 8 liegen. Der Sekundärriemen läuft über eine Varioscheibe 13 als Abtrieb für das Mäherrad und über eine Führungsscheibe 15, welche in Pfeilrichtung 14 schwenkbar ist. Die Schwenkachse 20 der Schwenkbewegung 14 liegt vorteilhaft zwischen der Führungsscheibe 15 und der Abtriebsscheibe 13 auf einer mittigen Achse zwischen den Antriebsscheiben 10, 11. Eine Riemenführung und bessere Umschlingung der Antriebsscheiben 10, 11 wird im vorliegenden Ausführungsbeispiel durch eine Umlenkrolle 24 gewährleistet, welche festliegt und in den ausgeschwenkten Stellungen der Führungsscheibe 15 den Sekundärriemen 8 aufnimmt.

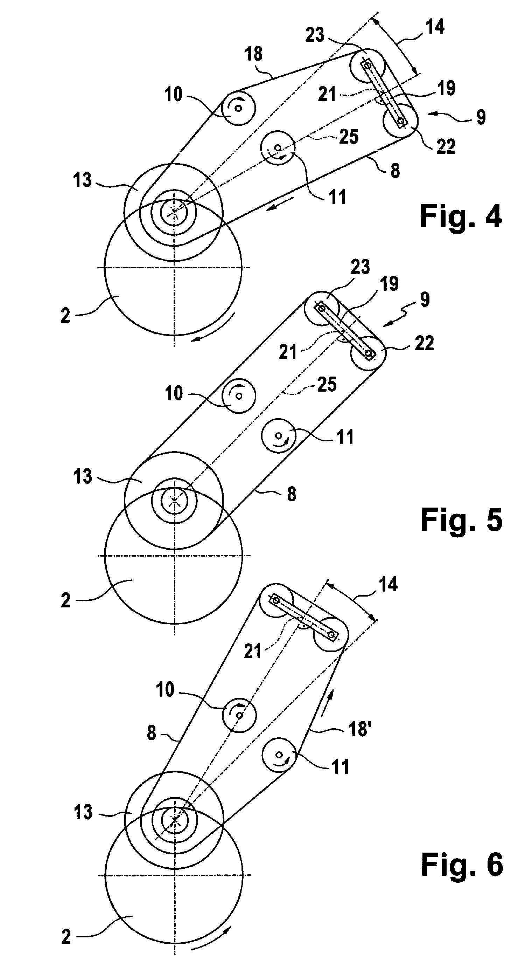

Die Fig. 4 bis 6 zeigen in schematischer Darstellung die Schaltstellungen der Schalteinrichtung 9 für Rückwärtstrieb (Fig. 4), Neutralstellung (Stillstand) und Vorwärtsfahrt (Fig. 6). Die schaltbare Rolleneinrichtung 9 besteht dabei im vorliegenden Ausführungsbeispiel aus einer Wippe 19, an deren Enden jeweils Umlenkrollen 22, 23 für den Sekundärriemen 8 angeordnet sind. Der Sekundärriemen 8 läuft in bereits beschriebener Weise über die Varioscheibe 13, welche das Rad 2 des Mähers antreibt. In der Neutralstellung gemäß Fig. 5 liegt das Wippenzentrum 21 auf einer Neutralachse 25, welche mittig zwischen den Antriebsscheiben 10, 11 durchgeht. Die Länge der Wippe 19 ist dabei derart ausgestaltet, daß die Umlenkscheiben 22, 23 den Sekundärriemen weiter aufspannen als der Außenumkreis der Durchmesser der beiden Antriebsscheiben 10, 11, wodurch der Riemen 8 in der gezeigten Leerlaufstellung mit keiner der beiden Antriebsscheiben 10, 11 in Kontakt kommt. Soll der Rasenmäher in Bewegung gesetzt werden, so wird die Rolleneinrichtung 9 in Pfeilrichtung 14 aus der Neutrallage geschwenkt, wodurch eine der beiden Antriebsscheiben 10, 11 in Eingriff mit dem jeweils zugeordneten Riementrum 18, 18' gebracht wird. Fig. 4 zeigt dabei die für Rückwärtsfahrt vorgesehene Stellung der Rolleneinrichtung 9, in der durch Verschwenkung der Wippe 19 die Umlenkrollen 22, 23 den Riementrum um die Antriebsscheibe 10 ziehen und diese auf den Riementrum 18 einwirkt. In der für Vorwärtsfahrt vorgesehenen Schaltstellung gemäß Fig. 6 wird der andere Riementrum 18' durch Verschwenkung der Umlenkscheiben in Pfeilrichtung 14 an die andere Antriebsscheibe 11 angelegt und so der Sekundärriemen 8 in entgegengesetzter Richtung bewegt. Um die Kraftübertragung zwischen den Antriebsscheiben und dem Sekundärriemen 8 zu erhöhen, kann der Sekundärriemen 8 als Zahnriemen ausgebildet werden und die Antriebsscheiben 10, 11 entsprechend mit Verzahnungen versehen werden. Auf diese Weise kann auch bei geringem Umschlingungswinkel aufgrund der formschlüssigen Kraftübertragung ein schlupfloser Antrieb erzeugt werden. Auch ist bei einer formschlüssigen Kraftübertragung eine geringere Riemenspannung erforderlich. Die Riemenspannung wird über die Einstellung des Durchmessers der Varioscheibe 13 über Federkraft bereitgestellt. Dadurch ändert sich mit zunehmendem Schwenkwinkel die Übersetzung. Der Sekundärriemen 8 wird vorteilhaft als V-Riemen ausgeführt, welcher reibschlüssig mit seinem Querschnitt an den Scheibenbacken der Varioscheibe 13 anliegt und diese antreibt. Der V-Sekundärriemen kann in der Variante mit verzahnten Antriebsscheiben 10 als V-Zahnriemen ausgebildet werden.

Fig. 7 und 8 zeigen eine Ausführung des erfindungsgemäßen Sekundärtriebes, welcher eine Unterstützung einer Kurvenfahrt des Rasenmähers ermöglicht. Dabei sind die gegenüberliegenden Räder des Mähers auf getrennten Achsen angeordnet und mit unterschiedlichen Drehzahlen drehbar. Die Wirkung eines Differentials kann dabei erreicht werden durch Anordnung zweier jeweils als Varioscheibe 13 ausgebildeten Abtriebsscheiben für die Räder 2 und zwei parallel angeordnete Sekundärriemen 8, 8', wobei jeder Riemen 8, 8' über Umlenkrollen 22, 23 geführt ist, welche jeweils auf einer Wippe 19, 19' gelagert sind. Dabei ist eine der Wippen 19' schwenkbeweglich um einen zwischen den Rollen 22, 23 liegenden Drehpunkt 21 und die andere Wippe 19 fest angeordnet. Die Treibriemen 8,8' laufen dabei jeweils über eine Führungsscheibe der beweglich gelagerten Wippe 19' und eine Führungsscheibe der fest angeordneten Wippe 19 .In Kurvenfahrt pendelt die bewegliche Wippe aus und erreicht über ein Kräftegleichgewicht eine Differentialwirkung. Die Schalteinrichtung 9 hat in den gezeigten Darstellungen die Wippen 19, 19' in Schwenkrichtung 14 verschoben, wodurch die Antriebsriemen 8, 8' von der Antriebsscheibe 11 angetrieben sind und die andere Antriebsscheibe 10 leer läuft. Beide Sekundärriemen 8, 8' werden so mit der gleichen Geschwindigkeit von der Antriebsscheibe 8 angetrieben, jedoch wird die Umlaufgeschwindigkeit der Riemen 8, 8' durch unterschiedliche Durchmesserstellungen der Varioscheiben 13 in abweichende Umdrehungszahlen der angetriebenen Räder 2 umgesetzt. Der Riemen 8 treibt dabei das linke Rad des Mähers an, während der Riemen 8' auf das rechte Rad wirkt. Fig. 7 stellt die Einstellung für eine Linkskurve in Vorwärtsfahrt dar, in der der Sekundärriemen 8 über einen großen Scheibendurchmesser das linke Rad mit entsprechend geringer Drehzahl antreibt, während der Riemen 8' über einen kleinen Scheibendurchmesser läuft. In entsprechender Weise ist in Fig. 8 die Schaltstellung für eine Rechtskurve in Vorwärtsfahrt dargestellt, in der ein kleiner Durchmesser der Varioscheibe 13 für den Sekundärriemen 8 des linken Rades vorgesehen ist.

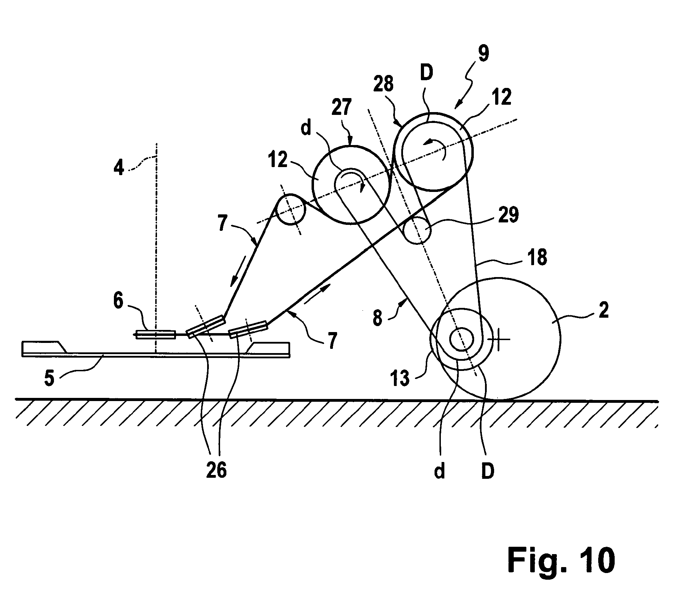

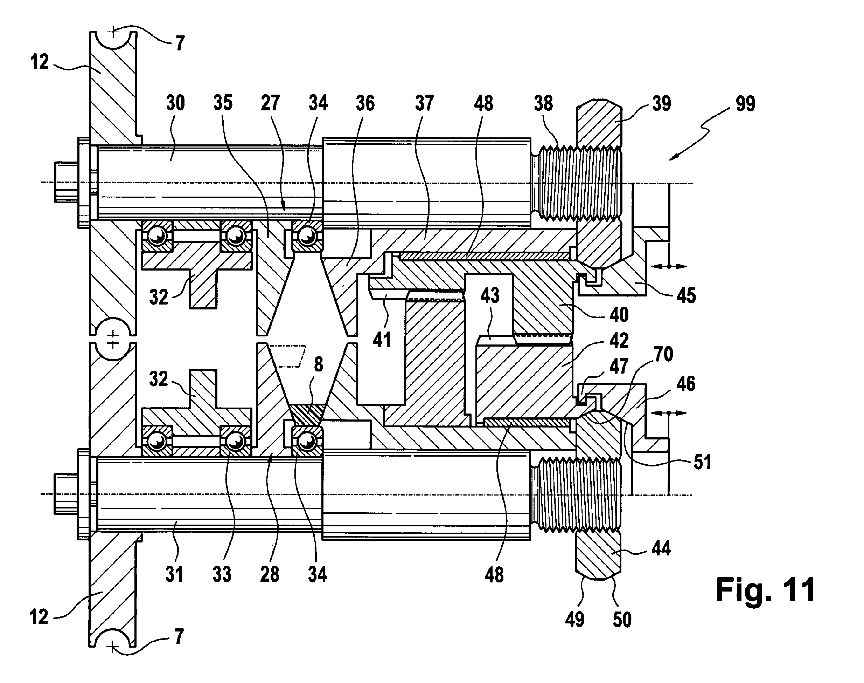

In der schematischen Darstellung der Fig. 10 ist ein zweistufiger Riementrieb zum Antrieb des Mäherrades 2 durch die Antriebswelle 4 des Motors gezeigt, welcher auf das Schneidmesser 5 des Rasenmähers wirkt. Die Motorwelle 4 treibt über eine Abtriebsscheibe 6 den Primärriemen 7 an, der über Umlenkrollen 26 zu den Antriebsscheiben für den Sekundärtrieb 8 geleitet wird. Der Primärriemen 7 läuft dabei über zwei nebeneinander drehbar angeordnete Rundriemenscheiben 12, wobei der Rundriemen wechselseitig um die Rundriemenscheiben 12 geführt ist und diese dadurch in entgegengesetzten Drehrichtungen antreibt. An den Rückseiten der Rundriemenscheiben 12 sind zur Aufnahme des Sekundärriemens 8 jeweils in drehfester Verbindung mit den Scheiben 12 Varioscheiben 27, 28 mit stufenlos einstellbaren Durchmessern angeordnet. Der Antrieb des Sekundärriemens 8 erfolgt dabei jeweils alternativ durch eine der beiden Varioscheiben 27, 28, wobei die unten anhand von Fig. 11 näher beschriebene Schalteinrichtung 99 jeweils eine der Varioscheiben 27, 28 in Eingriff mit dem Sekundärriemen 8 bringt und die jeweils andere Varioscheibe 27, 28 in Leerlaufstellung schaltet, in der der Riemen 8 lastfrei durchläuft. Zum Anfahren des Rasenmähers wird an einer der Varioscheiben 27, 28 entsprechend der gewünschten Fahrtrichtung der Durchmesser erhöht und auf diese Weise reibschlüssig auf den Riemen 8 eingewirkt. Im vorliegenden Ausführungsbeispiel ist die Varioscheibe 28 aktiviert und zieht mit ihrem großen Scheibendurchmesser reibschlüssig an dem Riementrum 18, während die andere Varioscheibe 27 auf kleinen Durchmesser d geschaltet ist und keine Wirkung auf den Sekundärriemen 8 entfaltet.

Die Abtriebsscheibe, welche auf das Rad 2 des Mähers wirkt, ist ebenfalls als Varioscheibe 13 ausgebildet, welche zwischen dem kleinen Durchmesser d und dem großen Durchmesser D stufenlos federbelastet verstellbar ist und welche für die geeignete Riemenspannung im Sekundärriemen 8 sorgt. Ein hoher Umschlingungswinkel der antreibenden Varioscheiben 27, 28 und damit ein kraftvoller Antrieb wird durch eine Führungsrolle 29 erreicht, welche auf der Neutralachse liegt und den Riemen 8 in Richtung der Abtriebsscheibe 13 um die Antriebsvarioscheiben 27, 28 zieht. Die Führungsrolle sorgt auch für die seitliche Riemenführung an der nicht in Eingriff befindlichen Varioscheibe.

Fig. 11 zeigt in einem Schnitt die Schalteinrichtung 99 bei Einwirkung auf die Drehzahl und die Drehrichtung der Antriebsräder des Rasenmähers. Die Schalteinrichtung 99 weist zwei parallel angeordnete Wellen 30, 31 auf, an deren jeweils einem Ende eine Rundriemenscheibe 12 gehalten ist. Die Rundriemenscheiben 12 werden von dem Primärriemen 7 des zweistufigen Riementriebs in entgegengesetzten Richtungen angetrieben. Die Wellen sind in einem Gehäuse 32 mittels Kugellagern 33 drehbar gelagert und laufen in entgegengesetzten Richtungen entsprechend ihren jeweiligen Rundriemenscheiben 12 um. Auf jeder Welle 30, 31 ist eine Varioscheibe 27, 28 angeordnet, von denen jeweils eine entsprechend der Schaltstellung der Schalteinrichtung 99 auf den Sekundärriemen gekuppelt wird. Die Varioscheiben 27, 28 bestehen jeweils aus zwei radialen Scheibenbacken 35, 36, welche an ihrer Innenseite einen V-förmigen Keilraum für den Sekundärriemen 8 ausbilden. Jede Varioscheibe 27, 28 weist eine feststehende Backe 35 auf und eine axial verschiebliche Backe 36, welche unter Verkleinerung des Scheibendurchmessers der jeweiligen Varioscheibe 27, 28 zum freien Ende der jeweiligen Welle 30, 31 hin verschoben werden kann. Zur Vergrößerung des wirksamen Scheibendurchmessers wird die verschiebliche Scheibenbacke 36 an die feststehende Scheibenbacke 35 herangefahren und der V-förmige Riemen mit zunehmendem Heranfahren der verschieblichen Scheibenbacke 36 radial nach außen gedrängt, bis schließlich die dem größten Durchmesser der Scheibe entsprechende strichlierte Darstellung des Treibriemens 8 erreicht ist. Befindet sich eine der Varioscheiben 27, 28 in der aktivierten Stellung, in der sich der Treibriemen 8 in der strichlierten Darstellung mit großem Querschnitt befindet und reibschlüssig von den Scheibenbacken 35, 36 mitgenommen wird, so wird die jeweils andere Varioscheibe 27, 28 in eine geöffnete Stellung gefahren, in der ein Wälzlager 34 zwischen den Scheibenbacken 35, 36 freigegeben wird. Das Wälzlager 34 ist mit seinem Innenring auf der Welle 30, 31 gehalten und bildet mit seinem Außenring die Auflagefläche für den Fuß des V-Riemens 8, wodurch der Riemen lastfrei auf dem Wälzlager 34 laufen kann.

Das axiale Verschieben der variablen Scheibenbacken 36 wird von einer Bedienperson über Steuerhülsen 45, 46 in die Wege geleitet, welche jeweils an den freien Enden der Wellen 30, 31 angeordnet sind. Die Schalteinrichtung 99 sieht eine Servounterstützung der Stellbewegung der Scheibenbacken 36 vor. Dabei ist an jeder Welle 30, 31 eine Gewindezapfen 38 vorgesehen, auf der jeweils eine Steuerscheibe, hier als Steuermutter 39, 44 ausgeführt, drehbeweglich angeordnet ist. An den beiden Wellen sind unterschiedliche Gewinderichtungen der Zapfengewinde vorgesehen. Die innenliegenden Stirnseiten der Steuermuttern 39, 44 beaufschlagen die jeweilige Nabe der beweglichen Scheibenbacken 36. Die Steuerhülsen 45 ,46, welche die Steuermuttern 39 ,44 in sich aufnehmen, weisen in ihrem Inneren eine Kontaktfläche auf, mit der sie bei axialem Druck durch die Bedienperson an die Steuermutter 39 ,44 gedrückt werden und dieser durch Reibung einen bremsenden Impuls verleihen. Die Steuermutter schraubt sich dadurch, dem Gewinde des Gewindezapfens 38 folgend, axial so weit ein, bis sich die Kontaktflächen der Steuermutter und der Steuerhülse 45 wieder lösen. Entsprechend der axialen Verschiebung der Steuermutter 39 wird die an der Innenseite anliegende Nabe 37 der Scheibenbacke 36 verschoben. Die axiale Verschiebung der Steuermutter 39 wird dabei von der Drehzahl der Welle 30 unterstützt, wodurch die Axialbewegung der Scheibenbacke maßgeblich im Sinn eines Servosystems auch bei geringem axialen Druck auf die Steuerhülse 45 mit der Kraft der Antriebswelle 30 durchgeführt wird.

Für die öffnende Bewegung der Scheibenbacken 36 in die entsprechende Rückstellbewegung der Steuermutter 39, 44 ist jeder Steuermutter 39, 44 ein Rückstellrad 40, 42 zugeordnet. Jedes Rückstellrad 40, 42 ist dabei drehbar auf der jeweiligen Nabe der Scheibenbacke gelagert und weist eine Kontaktfläche 70 auf, welche bei einem Zug auf eine entsprechende Kontaktfläche 49 an der Steuermutter wirkt. In die Rückstellräder, die auf der innenliegenden Stirnseite der Steuermuttern 39, 44 angeordnet sind, greift nach Art eines Hakens ein axialer Mitnehmer 47 der Steuerhülsen 45, 46, wodurch bei Zug an der jeweiligen Steuerhülse 45, 46 das zugeordnete Rückstellrad 40, 42 an die Steuermutter 39, 44 gedrückt wird. Die Kontaktflächen sind im vorliegenden Ausführungsbeispiel konisch ausgebildet, wobei die Steuermuttern 39, 44 doppelkegelstumpfförmig mit zu den Stirnseiten sich verjüngenden Konusflächen 49, 50 ausgebildet sind. Mit der außenliegenden Konusfläche 50 der Steuermuttern 39, 44 korrespondiert eine im Inneren der Steuerhülsen 45, 46 ausgebildete Konusfläche 51. Die Rückstellräder 40, 42 weisen entsprechend eine Konusfläche 70 auf, welche bei axialem Zug in Anlage an die korrespondierende Konusfläche 49 an der Innenseite der jeweiligen Steuermutter 39, 44 gebracht wird. Wird das Rückstellrad 40, 42 durch die Steuerhülse 45, 46 an den Konus gezogen, folgt die Steuermutter axial der Gewindesteigung, bis der Reibschluß zwischen den Kontaktflächen 70, 49 aufgehoben ist.

Eine rückstellende Ausschraubbewegung der Steuermutter mittels Servowirkung durch die Rückstellräder 40, 42 wird durch schneller als die Wellen 30, 31 laufende Rückstellräder 40, 42 ermöglicht. Dazu ist ein Getriebe vorgesehen ist, welches die Drehzahl der drehbeweglich auf den jeweiligen Naben 37 der verschieblichen Varioscheibenbacken 36 gelagerten Rückstellräder 40, 42 gegenüber der Wellendrehzahl erhöht. Im Ausführungsbeispiel laufen die Rückstellräder ca. 1,5 mal so schnell wie die Antriebswelle 31, wobei das Übersetzungsgetriebe durch Verzahnungen gebildet ist. Dabei ist eine der mit Wellendrehzahl umlaufenden Naben mit einem verzahnten Radialabschnitt versehen, welcher mit einer Verzahnung 41 geringerer Zähnezahl des auf der anderen Welle gelagerten Rückstellrades 40 kämmt. Dieses bildet seinerseits eine Zahnradpaarung mit einer Verzahnung 43 an dem anderen Rückstellrad 42, welches auf der den Radialabschnitt tragenden Nabe gelagert ist. Die axiale Länge der beiden Verzahnungen ist dabei derart gewählt, daß in jeder axialen Stellung der Scheibenbacken 36 ein Zahneingriff erfolgen kann.

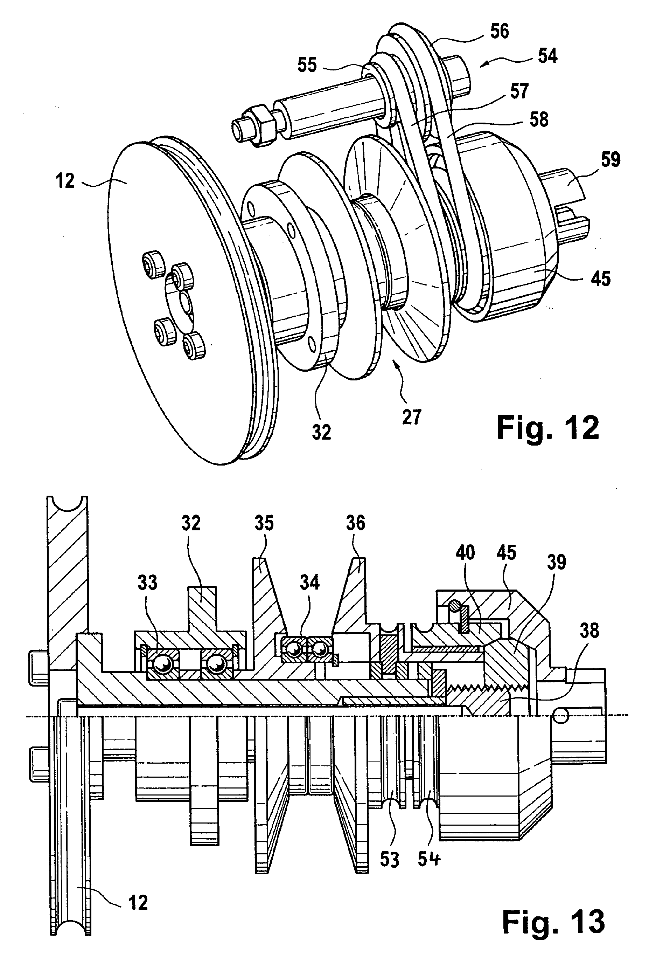

In Fig. 12 und 13 ist eine alternative Ausgestaltung eines Servoantriebs für eine Varioscheibe dargestellt. Dabei wird eine zentrale Welle 31 über eine Rundriemenscheibe 12 bei Aufnahme des Primärriemens angetrieben. Die Welle ist über Kugellager 33 im einem Gehäuse 32 gelagert. Auf der Welle ist drehfest eine Varioscheibe 27 zur Aufnahme des Sekundärriemens gehalten, wobei eine der Rundriemenscheibe 12 zugewandt liegende Scheibenbacke 35 fest an der Welle gehalten ist und die außenliegende Scheibenbacke 36 axial verschieblich angeordnet ist. In zentraler Lage zwischen den Scheibenbacken 35, 36 sind zwei Kugellager 34 vorgesehen, welche eine breite Auflagefläche für den in Leerlaufstellung mitlaufenden Sekundärriemen bereitstellen. Am freien Ende der Welle ist, wie bereits zu Fig. 11 beschrieben, eine Steuermutter 39 auf einem Gewindezapfen angeordnet und in einer Steuerhülse 45 aufgenommen. Die glockenförmige Steuerhülse 45 weist eine Aufnahme 59 für einen Betätigungshebel auf, mit dem die Steuerhülse axial verschoben werden kann. Das Rückstellrad 40, welches mit der innenliegenden Konusfläche der Steuermutter 39 korrespondiert, wird im vorliegenden Ausführungsbeispiel von einem Riemengetriebe 54 angetrieben, um die servounterstützte Rückstellbewegung der Steuermutter zu gewährleisten.

Das Riemengetriebe besteht aus zwei Treibriemen, von denen der eine über eine Riemenscheibe 53 an der Antriebswelle und der andere Treibriemen über eine Riemenscheibe 54 läuft, welcher am Umfang des frei drehbaren Rückstellrades 40 ausgebildet ist. Die Getriebeübersetzung mit einer höheren Drehzahl des Rückstellrades 40 gegenüber der Antriebswelle wird durch Riemenscheiben unterschiedlichen Durchmessers für die beiden Treibriemen 57, 58 gewährleistet, wobei der antreibende Riemen 57 über eine kleine Riemenscheibe 55 läuft und somit der längere Treibriemen 58 mit der gleichen Umlaufdrehzahl über die größere Riemenscheibe 56 schneller läuft.

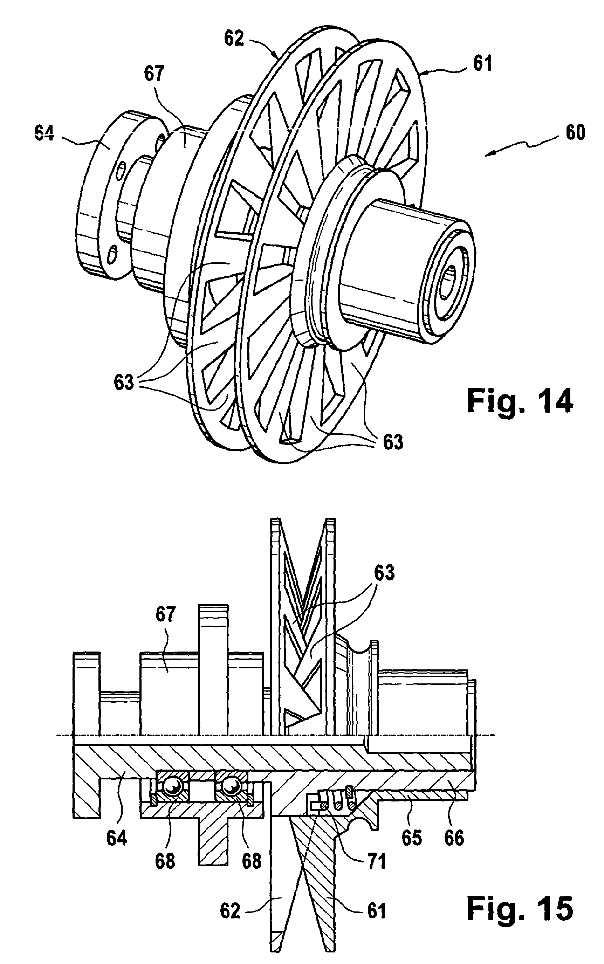

Die Fig. 14 und 15 zeigen eine bevorzugte Ausgestaltung der Varioscheibe 60, welche eine Verwendung herkömmlicher, schmaler Keilriemen ermöglicht. Die Varioscheibe 60 weist Scheibenbacken 61, 62 mit Speichen 63 auf, welche jeweils V-förmig nach innen gerichtet in die Zwischenräume der Speichen 63 der jeweils anderen Scheibenbacke 61, 62 eingreifen. Eine Antriebswelle 64 ist in einem Gehäuse 67 mittels Kugellagern 68 drehbeweglich angeordnet und nimmt die Scheibenbacken 61, 62 mit. Eine Nabe 65 einer axial verschieblichen Scheibenbacke 61 ist auf einer Nabe 66 gehalten, die drehfest auf der Antriebswelle 64 befestigt ist. Die verschiebliche Scheibenbacke wird von dem Servomechanismus nach den Fig 11, 12 und 13 angetrieben, welcher im Ausführungsbeispiel axial auf die Nabe 65 der verschieblichen Scheibenbacke 61 wirkt. Der Antrieb der Scheibenbacke erfolgt bei den Abtriebsvarioscheiben federbelastet durch Anordnung einer Spannfeder 71 zur Gewährleistung der Riemenspannung.

Die Speichenausführung belastet zwar den Riemen mehr, hat aber neben der Verwendbarkeit normaler Keilriemen den Vorteil, daß ein größerer Übersetzungsbereich erreicht werden kann.

## Patentansprüche

1. Fahrantrieb für einen über Räder (2) fahrbaren Rasenmäher (1), dessen Motor (3) ein Werkzeug (5) über eine Antriebswelle (4) rotierend antreibt, wobei mindestens ein Rad (2) des Rasenmähers (1) über ein Riemengetriebe von der Antriebswelle (4) antreibbar ist,
**dadurch gekennzeichnet, daß** der Fahrantrieb mehrstufig ausgebildet ist mit einem Primärantrieb (7), welcher zwei Antriebsscheiben (10, 11, 27, 28) mit unterschiedlichen Drehrichtungen antreibt und mit einem Sekundärriementrieb (8, 8'), welcher auf eine an das Rad (2) gekoppelte Abtriebsscheibe (13) wirkt, wobei dem Sekundärriementrieb (8, 8') eine Schalteinrichtung (9, 99) für die Antriebrichtung zugeordnet ist, mit welcher alternativ eine der beiden Antriebsscheiben (10, 11, 27, 28) in Wirkverbindung mit einem Riementrum (18, 18') des Sekundärriementriebes (8, 8') bringbar ist.

2. Antrieb nach Anspruch 1,
**dadurch gekennzeichnet, daß** die Abtriebsscheibe (13) als im Durchmesser stufenlos gegen eine Spannfederkraft einstellbare Varioscheibe (13) ausgebildet ist.

3. Antrieb nach Anspruch 1 oder 2,
**dadurch gekennzeichnet, daß** die Schalteinrichtung (9) eine Rolleneinrichtung (9) ist, über die der Sekundärriementrieb (8, 8') läuft und welche relativ zu den Antriebsscheiben (10, 11) derart auslenkbar angeordnet ist, daß je nach Schaltstellung alternativ eine der Antriebsscheiben (10, 11) in Eingriff mit einem Riementrum (18,18') des Sekundärriementriebs (8, 8') bringbar ist.

4. Antrieb nach einem der Ansprüche 1, 2 oder 3,
**dadurch gekennzeichnet, daß** die Antriebsscheiben (10, 11) zwischen der auslenkbaren Rolleneinrichtung (9) und der Abtriebscheibe und jeweils benachbart eines der Riementrums (18, 18') des Sekundärriementriebs (8, 8') angeordnet sind.

5. Antrieb nach einem der Ansprüche 2 bis 4,
**dadurch gekennzeichnet, daß** die Varioscheibe (13) mit einer auf die Riemenspannung des Sekundärriementriebs (8, 8') wirkenden Spannfeder (71) ausgestattet ist.

6. Antrieb nach einem der Ansprüche 2 bis 5,
**dadurch gekennzeichnet, daß** die auslenkbare Rolleneinrichtung (9) zwei auf einer Wippe (19, 19') angeordnete Führungsscheiben (22, 23) aufweist, wobei der Drehpunkt (21) der Wippe (19, 19') zwischen den Führungsscheiben (22, 23) liegt.

7. Antrieb nach Anspruch 6,
**dadurch gekennzeichnet, daß** der Sekundärriementrieb (8, 8') zwei Treibriemen (8, 8') umfaßt, welche auf unabhängig voneinander drehbare Räder (2) beidseitig des Rasenmähers (1) wirken, wobei für jeden Treibriemen (8, 8') unabhängig voneinander in ihren Durchmessern (d, D) einstellbare Abtriebsscheiben (13) vorgesehen sind und den Treibriemen (8, 8') zwei Wippen (19, 19') mit paarweise angeordneten Führungsscheiben (22, 23) zugeordnet sind, wobei eine der Wippen (19') drehbeweglich um einen zwischen den Führungsscheiben (22, 23) liegenden Drehpunkt (21) und die andere Wippe (19) fest angeordnet ist und die Treibriemen (8, 8') jeweils über eine Führungsscheibe der beweglich gelagerten Wippe (19') und eine Führungsscheibe der fest angeordneten Wippe (19) laufen.

8. Antrieb nach Anspruch 1 oder 2,
**dadurch gekennzeichnet, daß** die mit unterschiedlichen Drehrichtungen angetriebenen Antriebsscheiben als in ihren Durchmessern (d, D) variabel einstellbare Varioscheiben (27, 28) ausgebildet sind, über welche der Sekundärriementrieb (8, 8') läuft, wobei die Schalteinrichtung (99) für die Antriebsrichtung die Stellmittel für die Veränderung der Scheibendurchmesser (d, D) derart koppelt, daß zur Einwirkung einer Varioscheibe (27, 28) auf den Riementrum (18, 18') ein vergrößerter Scheibendurchmesser eingestellt wird und der Durchmesser der jeweils anderen Varioscheibe (27, 28) in eine Leerlaufstellung mit kleinem Durchmesser (d) gebracht wird, in welcher der Sekundärriemen (8, 8') lastfrei durchläuft.

9. Antrieb nach Anspruch 8,
**dadurch gekennzeichnet, daß** die Varioscheiben (27, 28) jeweils zwei in Überdeckung liegende Scheibenbacken (35, 36) aufweisen, welche axial zueinander verschieblich angeordnet sind und einen V-förmigen Zwischenraum zur Aufnahme eines Treibriemens (8, 8') einschließen, wobei zwischen den Scheibenbacken (35, 36) ein frei drehbar gelagerter Auflagering (34) angeordnet ist und die Schaltvorrichtung (99) die sich einander annähernde Stellbewegung der Scheibenbacken (36) der einen Varioscheibe (27, 28) mit der Öffnung der jeweils anderen Varioscheibe (27, 28) koppelt.

10. Antrieb nach Anspruch 9,
**dadurch gekennzeichnet, daß** die Schalteinrichtung (99) umfaßt
- zwei parallel liegende Wellen (30, 31), auf denen jeweils eine für den Primärriemen (7) vorgesehene Antriebsscheibe (12) und eine Varioscheibe (27, 28) drehfest angeordnet ist, wobei eine der Antriebsscheibe (12) zugewandt liegende Scheibenbacke (35) fest und die außen liegende Scheibenbacke (36) axial verschieblich ist,
- an jeder Welle (30, 31) ein Steuergewinde (38) mit unterschiedlichen Gewinderichtungen, auf dem jeweils eine Steuerscheibe (39, 44) mit Gewindeeingriff drehbeweglich angeordnet ist, an welcher sich die axial verschiebliche Scheibenbacke (36) der Varioscheibe (27, 28) axial abstützt,
- pro Welle (30, 31) ein drehbar auf einer Nabe (37) der verschieblichen Scheibenbacke (36) gelagertes Rückstellrad (40, 42), welches von einer der Wellen (31) mittels eines Getriebes (41, 43, 54) mit erhöhter Drehzahl gegenüber der Welle (31) angetrieben wird und welches einen Konusmantel (70) aufweist, welcher mit einer zugewandt liegenden Fläche (49) der Steuerscheibe (39,44) über axiales Spiel in reibschlüssige Verbindung bringbar ist,
- pro Welle (30, 31) eine Steuerhülse (45, 46), welche mit einer in ihrem Inneren ausgebildeten Kontaktfläche (51) mit einem außen liegenden Flächenabschnitt (50) der Steuerscheibe (39, 44) über axiales Spiel in reibschlüssige Verbindung bringbar ist und in axialer Wirkverbindung mit dem Rückstellrad (42) steht.

11. Antrieb nach Anspruch 10,
**dadurch gekennzeichnet, daß** die Kontaktflächen (49, 50, 51, 70) für reibschlüssigen Kontakt zwischen der Steuerscheibe (39, 44) und außen liegend der Steuerhülse (45, 46), innen liegend dem Rückstellrad (40, 42), konisch ausgebildet sind.

12. Antrieb nach Anspruch 10 oder 11,
**dadurch gekennzeichnet, daß** das Steuergewinde durch einen Gewindezapfen (38) der jeweiligen Welle (30, 31) gebildet und die Steuerscheibe (39, 44) als auf dem Gewindezapfen (38) schraubbewegliche Mutter (39, 44) vorgesehen ist.

13. Antrieb nach Anspruch 10, 11 oder 12,
**dadurch gekennzeichnet, daß** ein Riemengetriebe (54) zwischen Welle (31) und Rückstellrad (40) vorgesehen ist.

14. Antrieb nach einem der vorhergehenden Ansprüche,
**dadurch gekennzeichnet, daß** der Primärantrieb (7) als Riementrieb (7) ausgebildet ist
